# EUROPEAN PATENT APPLICATION

(11) **EP 3 534 509 A1**
(43) Date of publication of application: **04.09.2019**
(21) Application number: 19160141.8
(22) Date of filing: 28.02.2019
(51) Int. Cl.: H02K 7/116, H02K 5/06

(54) **POWER TRANSMISSION UNIT**

(30) Priority: 28.02.2018 JP 2018034782
(71) Applicant: Toyota Jidosha Kabushiki Kaisha, Toyota-shi, Aichi 471-8571 (JP); Aisin AW Co., Ltd., Fujii-cho Anjo-shi, Aichi 444-1192 (JP)
(72) Inventor: FUJIKAWA, Masato, Aichi-ken, 471-8571 (JP); OKITA, Sou, Aichi, 444-1192 (JP)
(74) Representative: D Young & Co LLP

(57) **Abstract**

A power transmission unit (4) in which a size, a weight, a manufacturing cost, and a noise are reduced. A transaxle case (8) includes a casing (30), a housing (31) and a center support (32) defining an internal space of the transaxle case (8). In the casing (30), one end (21a) of a rotor shaft (21) of a motor (2) is supported by an outer wall (37) and a stator (33) of the motor (2) is fixed to the outer wall (37). The center support (32) is attached to the casing (30) or the housing (31) in the transaxle case (8) while supporting an other end (21b) of the rotor shaft (21) and an other end (35b) of the rotary shaft (35), and the casing (30) and the housing (31) are fastened to each other.

## Description

### CROSS REFERENCE TO RELATED APPLICATIONS

The present invention claims the benefit of priority to Japanese Patent Application No. 2018-034782 filed on February 28, 2018 with the Japanese Patent Office, the entire contents of which are incorporated herein by reference in its entirety.

### BACKGROUND

### Field of the Invention

Embodiments of the present invention relate to the art of a power transmission unit that transmits an output power of a prime mover including a motor, and more especially, to a structure of a case of a power transmission unit holding at least one motor and a geared transmission.

### Discussion of the Related Art

JP-A-2017-056841 describes a multiple shaft power transmission unit as a transaxle mounted on a hybrid vehicle in which rotary shafts of two motors and a counter shaft arranged in different axes. The power transmission unit taught by JP-A-2017-056841 comprises an input shaft that is connected to an engine, a counter shaft, a first motor, a second motor, a planetary gear mechanism that distributes an output power of the engine to the first motor and an output member, and a transaxle case that holds the motors and the planetary mechanism, and that supports the input shaft and the counter shaft. The transaxle includes a case, a rear cover and a housing. In the transaxle case, an internal space is divided into two spaces by the case as a bulkhead. Specifically, in the transaxle case, a motor chamber in which the first motor and the second motor are arranged is formed between the case and the rear cover, and a gear chamber in which the input shaft, the counter shaft, the planetary gear mechanism and a differential mechanism are arranged is formed between the case and the housing.

JP-A-2011-120417 describes a drive unit as an in-wheel motor. The drive unit taught by JP-A-2011-120417 comprises a motor including a stator and a rotor, and a case holding the motor therein. The case includes a first case part and a second case part to which the stator of the motor is fixed by a bolt.

The transaxle taught by JP-A-2017-056841 is connected to an engine of a hybrid vehicle. As described, the transaxle case of the transaxle taught by JP-A-2017-056841 includes the housing as a bulkhead of engine side, the case as the internal bulkhead, and the rear cover as a bulkhead of an opposite side to the engine. The housing and the case are fixed to each other by a bolt, and the case and the rear cover are fixed to each other by a bolt to form the transaxle case holding the first motor, the second motor, the planetary gear mechanism and the like. Thus, in order to form the transaxle case, the case, the rear cover, and the housing are fixed to one another at two points. That is, at least two bolts are required to form the transaxle case, and a flange portion or the like is also required to be formed at each joint portion to form a bolt hole.

In addition, in the transaxle described in JP-A-2017-056841, the stator of the first motor and the stator of the second motor are respectively fixed to the bulkhead portion of the case by bolts. A rotor shaft of the first motor and a rotor shaft of the second motor are individually supported by the bulkhead portion of the case and the rear cover through a radial bearing.

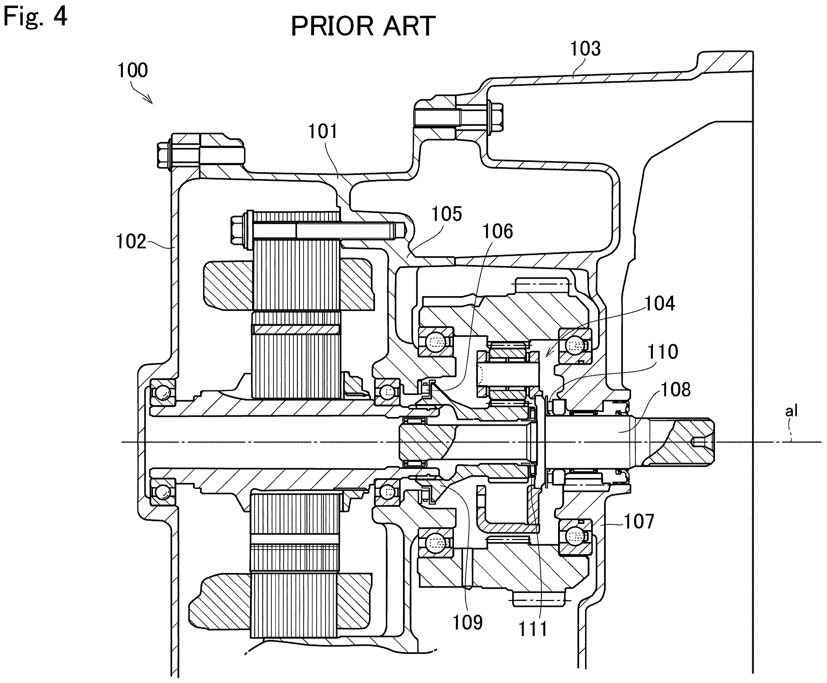

As shown in Fig. 4, a transaxle case 100 of the conventional transaxle case as described in JP-A-2017-056841 comprises a case 101, a rear cover 102, and a housing 103. Specifically, the rear cover 102 is a lid-like or plate-like member that closes one of openings of the case 101. A weight of the rear cover 102 is relatively lighter than those of the case 101 and the housing 103, and a rigidity of the rear cover 102 is relatively weaker than those of the case 101 and the housing 103. Specifically, in the rear cover 102, a surface rigidity against a load in the axial direction (i.e., in the horizontal direction in Fig. 4) is especially low. For this reason, a surface of the rear cover 102 may be vibrated by a fluctuating load derived from reaction forces of meshed gears transmitted through a radial bearing supporting a rotary shaft, and consequently a large noise may be generated.

In order to reduce such noise generated by the rear cover 102, in a planetary gear mechanism 104, a thrust bearing 106 for reducing the noise may be arranged between a sun gear and a bulkhead 105 of the case 101 to receive the fluctuating load (or a thrust load) applied from the planetary gear mechanism 104. However, a cost, a size, and a weight of the transaxle are increased by the additional thrust bearing 106. In the conventional transaxle shown in Fig. 4, in order to fix a position of the planetary gear mechanism 104 in a direction of the rotational axis al (i.e., in the thrust direction), a thrust bearing 110 is arranged between a side wall 107 of the housing 103 and an input shaft 108, and a thrust bearing 111 is arranged between a rotary shaft 109 of the planetary gear mechanism 104 and the input shaft 108.

### SUMMARY

Aspects of preferred embodiments of the present invention have been conceived noting the foregoing technical problems, and it is therefore an object of the present invention is to reduce a size, a weight, and a manufacturing cost of a power transmission unit, and to reduce a noise radiated from the power transmission unit.

The embodiment of the present invention relates to a power transmission unit that transmits power generated by a prime mover including at least one motor. The power transmission unit comprises a geared transmission and a transaxle case that holds the motor and the geared transmission. In the power transmission unit, the motor includes a stator and a rotor shaft. The transaxle case includes: a casing that serves as a part of an outer shell of the transaxle case; a housing that is formed separately from the casing, and that serves as another part of the outer shell of the transaxle case; and a center support that is formed separately from the casing and the housing, and that defines an internal space of the transaxle case to form a chamber of the casing side and a chamber of the housing side. The casing includes a motor cover having an opening formed on one of end portions, and an outer wall that is formed integrally with the other end portion of the motor cover to close the other end portion. The motor is held within the motor cover. One end of the rotor shaft is supported by the outer wall, and the stator is fixed to the outer wall. The housing includes a gear cover and a bulkhead formed integrally with the gear cover on one end of the gear cover. The geared transmission is held within the gear cover. One end of a rotary shaft of the geared transmission is supported by the bulkhead. The center support is attached to any one of the casing and the housing in the transaxle case while supporting an other end of the rotor shaft and an other end of the rotary shaft. The casing and the housing are fastened to each other.

In a non-limiting embodiment, the center support may be attached to the casing in the transaxle case.

In a non-limiting embodiment, the center support may be attached to the housing in the transaxle case.

In a non-limiting embodiment, the prime mover may include an engine arranged outside of the transaxle case, and the engine may be fastened to the housing. The power transmission unit may be applied to a hybrid vehicle in which the prime mover includes the motor and the engine.

In a non-limiting embodiment, the motor may include a first motor and a second motor. The first motor may comprises a first stator and a first rotor shaft, and the second motor may comprise a second stator and a second rotor shaft. The first motor and the second motor may be arranged within the motor cover. One end of the first rotor shaft and one end of the second rotor shaft may be respectively support by the outer wall. The first stator and the second stator are fastened respectively to the outer wall. An other end of the first rotor shaft may be supported by the center support, and an other end of the second rotor shaft is supported by the housing or the center support. The power transmission unit may be applied to the hybrid vehicle in which the prime mover includes the first motor, the second motor, and the engine.

Thus, according to the exemplary embodiment of the present invention, the transaxle case of the power transmission unit is formed by joining two members such as the casing and the housing. In the conventional power transmission unit shown in Fig. 4, the bulkhead supporting rotary shafts of the motor and the geared transmission is formed integrally with the casing. On the other hand, according to the exemplary embodiment of the present disclosure, the center support corresponding to the bulkhead of the conventional power transmission unit is formed separately and attached to the casing or the housing in the transaxle case. According to the exemplary embodiment of the present invention, therefore, one of joint portions between the members can be reduced compared to the conventional power transmission unit formed of the three members shown in Fig. 4. That is, in the power transmission unit according to the exemplary embodiment of the present invention, numbers of the flanges to be joined to the other members, and bolts fixing the flanges contacted to each other can be reduced compared to the conventional power transmission unit. For this reason, number of the parts, material of the parts, and a required man-hour to assemble the power transmission unit can be reduced. In addition, a size, a weight, and a manufacturing cost of the power transmission unit can be reduced.

In the conventional power transmission unit formed of the three members shown in Fig. 4, the rear cover 102 and the case 101 are formed separately. On the other hand, according to the exemplary embodiment of the present invention, the motor cover and the outer wall are integrated to form the casing of the transaxle case, and the stator of the motor is fixed to the outer wall of the casing. According to the exemplary embodiment of the present invention, therefore, rigidity of the casing is increased compared to that of the conventional rear cover. In addition, since the stator of the motor as a heavy member is attached to the outer wall of the casing, a weight of the outer wall is increased thereby improving a vibration damping characteristic. That is, vibrations and noises generated in the power transmission unit can be absorbed effectively by the casing. For this reason, noise emitted from the casing can be reduced effectively.

In the power transmission unit according to one aspect of the present invention, the center support is attached to the casing in the transaxle case. That is, the motor and the center support may be assembled easily with the casing from the same direction. In addition, a motor unit in which the motor is held in the casing is formed by attaching the center support to the casing in such a manner as to support the rotor shaft of the motor by the casing and the center support. According to one aspect of the present invention, therefore, the power transmission unit may be formed easily by joining the motor unit to the housing.

In the power transmission unit according to another aspect of the present invention, the center support is attached to the housing in the transaxle case. According to another aspect of the present invention, therefore, the geared transmission and the center support may be assembled easily with the housing from the same direction. In addition, a gear box in which the geared transmission is held in the housing is formed by attaching the center support to the housing in such a manner as to support the rotary shaft of the geared transmission. According to another aspect of the present invention, therefore, the power transmission unit may be formed easily by joining the gear box to the casing.

Further, the housing of the transaxle case is fixed to the engine arranged outside of the transaxle case. For example, the housing is fixed to at least one of an engine block or crank case by a bolt. For this reason, the power transmission unit according to the exemplary embodiment of the present invention may be applied easily to a hybrid vehicle in which a prime mover includes an engine and at least one motor.

According to the exemplary embodiment of the present invention, specifically, the first motor and the second motor are held in the casing of the transaxle case. The rotor shafts of those motors are supported by the transaxle case and the center support, and the stators of those motors are fixed to the casing. In addition, the housing of the transaxle case is fixed to the engine by the bolt. For this reason, the power transmission unit according to the exemplary embodiment of the present invention may be applied easily to a hybrid vehicle in which a prime mover includes an engine and at least two motors.

### BRIEF DESCRIPTION OF THE DRAWINGS

Features, aspects, and advantages of exemplary embodiments of the present invention will become better understood with reference to the following description and accompanying drawings, which should not limit the invention in any way.
Fig. 1 is a schematic illustration showing a structure of a drivetrain of a hybrid vehicle to which the power transmission unit according to the embodiment of the present invention is applied;
Fig. 2 is a cross-sectional view showing a structure of the power transmission unit according to one embodiment of the present invention;
Fig. 3 is a cross-sectional view showing a structure of the power transmission unit according to another embodiment of the present invention; and
Fig. 4 is a cross-sectional view showing one example of a structure of a conventional power transmission unit.

### DETAILED DESCRIPTION OF THE PREFERRED EMBODIMENT(S)

Embodiments of the present invention will now be explained with reference to the accompanying drawings. Note that the embodiments shown below are merely examples of the present invention, and do not limit a scope of the present invention.

For example, the power transmission unit according to the embodiment of the present invention may be used in an electric vehicle in which a prime mover includes at least one motor, and a hybrid vehicle in which a prime mover includes a motor and an engine. In the hybrid vehicle, output powers of the engine and the motor are distributed and synthesized by a power split mechanism. The power transmission unit may also be called a transaxle that is used in a front-engine front-drive layout vehicle (i.e., a FF layout vehicle), or a rear-engine rear-drive layout vehicle (i.e., a RR layout vehicle) in which the prime mover and a drive shaft are arranged close to each other.

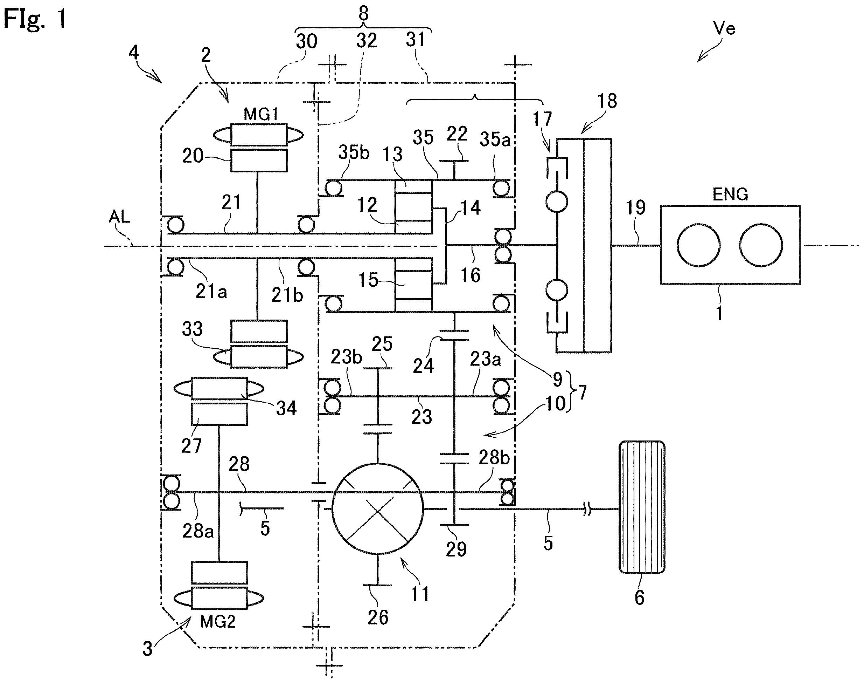

Fig. 1 shows one example of a structure of a hybrid vehicle (as will be simply called the "vehicle" hereinafter) Ve to which a power transmission unit 4 according to the embodiment is applied. A prime mover of the hybrid vehicle Ve includes an engine (referred to as "ENG" in Fig. 1) 1, a first motor (referred to as "MG1" in Fig. 1) 2, and a second motor (referred to as "MG2" in Fig. 1) 3. In the hybrid vehicle Ve, output powers of each of the prime movers are delivered to drive wheels 6 through the power transmission unit 4 and a drive shaft 5.

The engine 1 is a conventional internal combustion engine such as a gasoline engine and a diesel engine. The engine 1 is arranged outside of a transaxle case 8 of the power transmission unit 4.

The first motor 2 as a motor-generator is arranged in a transaxle case 8 coaxially with the engine 1 and a power split mechanism 9 on a rotational axis AL.

In the transaxle case 8, the second motor 3 also as a motor-generator is connected to the drive shaft 5 through an output gear 10 and a differential gear unit 11 so that an output torque of the second motor 3 is applied to the drive shaft 5.

The power transmission unit 4 as a transaxle comprises a geared transmission 7 that delivers output powers of the engine 1, the first motor 2, and the second motor 3 to the drive wheels 6 through the drive shaft 5. Thus, the first motor 2, the second motor 3, and the geared transmission 7 are held in the transaxle case 8, and rotary shafts of those elements are supported by the transaxle case 8. Detailed description of the transaxle case 8 will be described later.

In the power transmission unit 4 shown in Fig. 1, the geared transmission 7 includes the power split mechanism 9 and the output gear 10. The differential gear unit 11 serves as a final reduction unit of the vehicle Ve.

According to the example shown in Fig. 1, a single-pinion planetary gear set is adopted as the power split mechanism 9. Specifically, the power split mechanism 9 comprises a sun gear 12, a ring gear 13 as an internal gear arranged concentrically with the sun gear 12, a plurality of pinion gears 15 interposed between the sun gear 12 and the ring gear 13, and a carrier 14 supporting the pinion gears 15 in a rotatable manner.

The power split mechanism 9 is also disposed coaxially with the engine 1 and the first motor 2 on the rotational axis AL. In the power split mechanism 9, the carrier 14 is connected to an input shaft 16 of the power split mechanism 9. That is, a rotary shaft of the carrier 14 serves as the input shaft 16 of the power split mechanism 9. The input shaft 16 is connected to an output shaft 19 of the engine 1 through a flywheel 18 having a damper mechanism 17. Thus, the carrier 14 is connected to the engine 1 through the input shaft 16, the damper mechanism 17, and the flywheel 18.

The first motor 2 is disposed in an opposite side of the engine 1 across the power split mechanism 9, and in the first motor 2, a rotor shaft 21 that is rotated integrally with a rotor 20 is connected to the sun gear 12 of the power split mechanism 9. The rotor shaft 21 and a rotary shaft of the sun gear 12 are hollow shafts in which a rotary shaft of an oil pump (not shown) is connected to the output shaft 19 of the engine 1 through a hollow space of the hollow shafts.

A first drive gear 22 as an external gear is connected to the ring gear 13 of the power split mechanism 9. Specifically, the first drive gear 22 is formed integrally with the ring gear 13 of the power split mechanism 9 to be meshed with a counter driven gear 24 so that the ring gear 13 and the first drive gear 22 are rotated integrally. The first drive gear 22, a counter shaft 23, the counter driven gear 24, and a final drive gear 25 serve as the output gear 10.

The countershaft 23 is arranged in parallel with the common rotational axis of the output shaft 19 of the engine 1, the input shaft 16 of the power split mechanism 9, and the rotor shaft 21 of the first motor 2. The counter driven gear 24 is fitted onto one end of the countershaft 23 (i.e., right side in Fig. 1) to be rotated integrally therewith while being meshed with the first drive gear 22, and the final drive gear 25 is fitted onto the other end of the countershaft 23 (i.e., left side in Fig. 1) in such a manner as to be rotated integrally therewith while being meshed with a final driven gear 26 of the differential gear unit 11. The final driven gear 26 serves as a differential ring gear of the differential gear unit 11.

Thus, the ring gear 13 of the power split mechanism 9 is connected to the drive wheels 6 through the first drive gear 22, the countershaft 23, the counter driven gear 24, the output gear 10 including the final drive gear 25, the differential gear unit 11, and the drive shaft 5.

In the drivetrain of the vehicle Ve, an output torque of the second motor 3 can be added to the torque delivered from the power split mechanism 9 to the drive wheels 6 through the drive shaft 5. To this end, a rotor 27 of the second motor 3 is connected to a rotor shaft 28 extending in parallel with the countershaft 23 to rotate integrally therewith, and a second drive gear 29 is fitted onto a leading end of the rotor shaft 28 to be rotated integrally therewith while being meshed with the counter driven gear 24. Thus, the second motor 3 is connected to the drive shaft 5 through the second drive gear 29 and the output gear10.

Thus, an output power of the engine 1 is distributed to the first motor 2 and to the drive shaft 5 through the power split mechanism 9. An electric power generated by the first motor 2 may be supplied to the second motor 3 to generate torque, and output torque of the second motor 3 may be delivered to drive wheels 6 through the drive shaft 5.

In order to prevent a reverse rotation of the output shaft 19 of the engine 1, a brake device may be disposed between the output shaft 19 and the input shaft 16 of the power split mechanism 9. To this end, for example, a one-way clutch that is engaged to stop a counter rotation by a counter torque may be adopted as the brake device. Instead, a friction brake or a dog clutch may also be used to serve as the brake device.

As described, the power transmission unit 4 is configured to reduce noises and vibrations, and to reduce a size, a weight, and a manufacturing cost of a power transmission unit 4. For these purposes, the transaxle case 8 of the power transmission unit 4 is formed by combining a casing 30, a housing 31, and a center support 32.

The casing 30 serves as a part of an outer shell of the transaxle case 8, and the first motor 2 is held in the casing 30. Specifically, a stator 33 of the first motor 2 is fixed to the casing 30, and one end 21a of the rotor shaft 21 of the first motor 2 is supported by the casing 30. According to the example shown in Fig. 1, the second motor 3 is also held in the casing 30 together with the first motor 2. Specifically, the stator 34 of the second motor 3 is fixed to the casing 30, and one end 28a of the rotor shaft 28 is supported by the casing 30.

The housing 31 serves as another part of the outer shell of the transaxle case 8, and the geared transmission 7 is held in the housing 31. One end (i.e., a right end in Fig. 1) of the rotary shaft of the geared transmission 7 is supported by the housing 31. According to the example shown in Fig. 1, the power split mechanism 9 and the output gear 10 are held in the housing 31 to serve as the geared transmission 7. One end (i.e., a right end in Fig. 1) of the rotary shaft of the power split mechanism 9, specifically, the input shaft 16 of the power split mechanism 9 is supported by the housing 31, and one end of the rotary shaft of the output gear 10, specifically, one end 23a of the counter shaft 23 is supported by the housing 31. In addition, an other end 28b of the rotor shaft 28 of the second motor 3 is also supported by the housing 31.

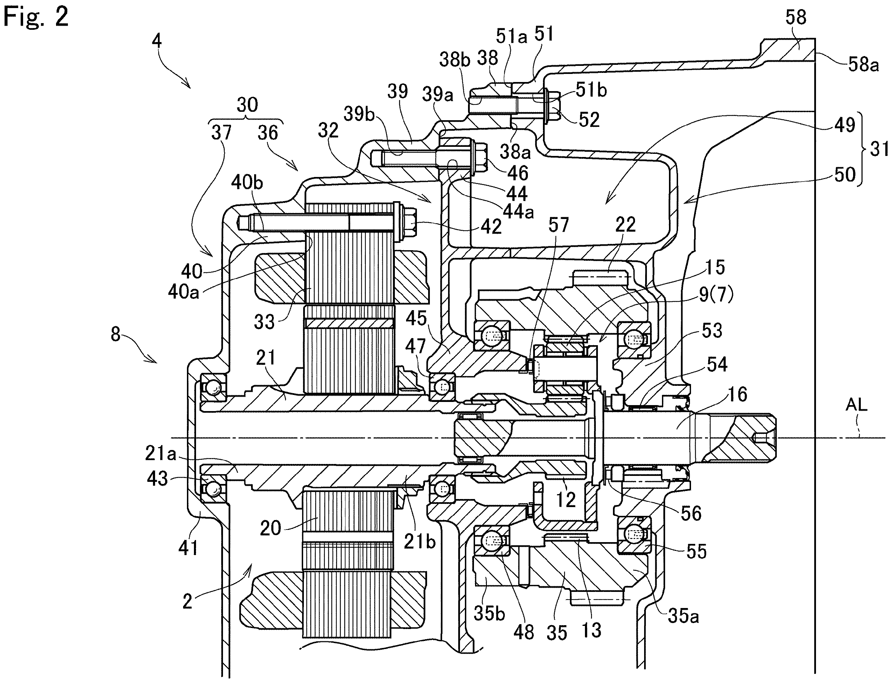

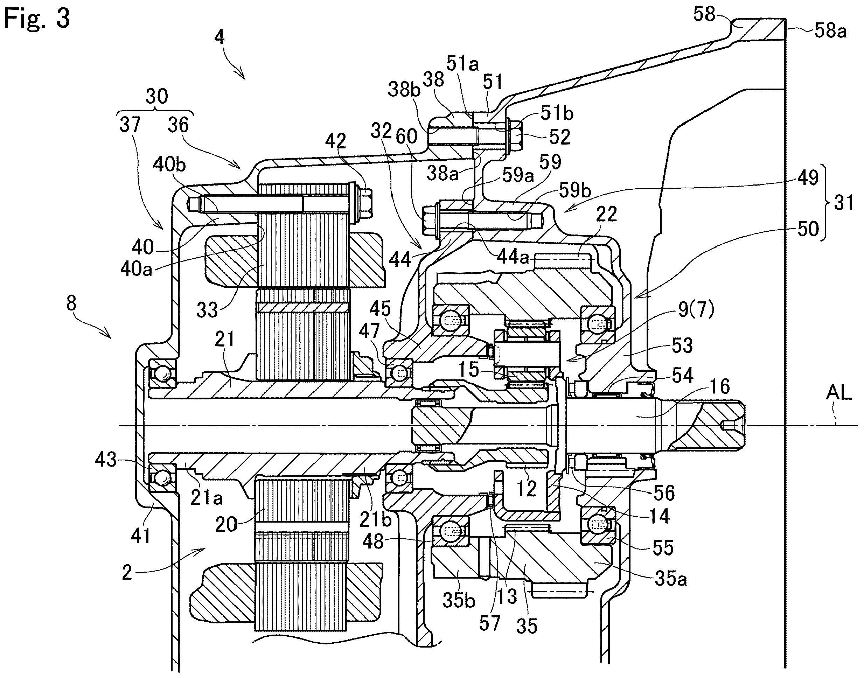

The center support 32 serves as an inner bulkhead of the transaxle case 8 to divide an internal space of the transaxle case 8 into two spaces. Consequently, a chamber is formed between the casing 30 and the center support 32, and another chamber is formed between the housing 31 and the center support 32. To this end, in the after-explained embodiment shown in Fig. 2, the center support 32 is attached to a predetermined inner portion of the casing 30. By contrast, in the after-explained embodiment shown in Fig. 3, the center support 32 is attached to a predetermined inner portion of the housing 31. An other end 21b of the rotor shaft 21 of the first motor 2, and an other end (i.e., a left end in Fig. 1) of the rotary shaft of the geared transmission 7 are supported by the center support 32. In the example shown in Fig. 1, specifically, an other end (i.e., a left end in Fig. 1) of the rotary shaft of the power split mechanism 9, that is, an other end 35b of a rotary shaft 35 of the ring gear 13 is supported by the center support 32. In addition, an other end (i.e., a left end in Fig. 1) of the rotary shaft of the output gear 10, that is, an other end 23b of the counter shaft 23 is also supported by the center support 32.

A structure of the transaxle case 8 is shown in Figs. 2 and 3 in more detail. In Fig. 2, there is shown an embodiment in which the center support 32 is attached to a predetermined internal portion of the casing 30.

As illustrated in Fig. 2, the casing 30 and the housing 31 form the outer shell of the transaxle case 8. The casing 30 comprises a motor cover 36 and an outer wall 37.

The motor cover 36 is a cylindrical wall corresponding e.g., to the case 101 of the conventional power transmission unit shown in Fig. 4, and the first motor 2 is covered by the motor cover 36. One end of the motor cover 36 is opened toward the right side in Fig. 2 in the direction of the rotational axis AL of the power transmission unit 4, and the other end of the motor cover 36 is closed by the outer wall 37 formed integrally with the motor cover 36. In the motor cover 36, a flange 38 is formed to fasten the casing 30 to the housing 31 by a bolt, and a boss 39 is formed to fasten the center support 32 to the casing 30 by a bolt.

Specifically, the flange 38 is formed on an outer circumferential portion of the opening of the motor cover 36, and a contact face 38a is formed on a leading end of the flange 38 to be brought into contact to a contact face 51a of a flange 51 of the housing 31. In addition, a screw hole 38b is formed on the flange 38 at a portion corresponding to a bolt hole 51b formed on the flange 51 of the housing 31. A bolt 52 is screwed into the bolt hole 51b of the housing 31 and the screw hole 38b of the casing 30 to fasten the housing 31 to the casing 30.

The boss 39 is formed on an inner circumferential portion of the motor cover 36 at a portion close to the opening of the motor cover 36 in the direction of the rotational axis AL, and a contact face 39a to be brought into contact to an after-mentioned flange 44 of the center support 32 is formed on the boss 39. In addition, a screw hole 39b is formed on the boss 39 at a portion corresponding to a bolt hole 44a formed on the flange 44 of the center support 32. A bolt 46 is screwed into the bolt hole 44a of the center support 32 and the screw hole 39b of the casing 30 to fasten the center support 32 to the casing 30.

The outer wall 37 is a lid or plate portion corresponding e.g., to the rear cover 102 of the conventional power transmission unit shown in Fig. 4. The outer wall 37 is formed integrally with the motor cover 36 to cover the first motor 2 from the left side in Fig. 2 by e.g., a casting or forging. In the outer wall 37, a boss 40 is formed to fasten the stator 33 of the first motor 2 to the casing 30 by a bolt, and a boss 41 is formed to support said one end 21a of the rotor shaft 21 of the first motor 2.

Specifically, the boss 40 is formed on the casing 30 at a portion between the outer wall 37 and the motor cover 36, and a contact face 40a is formed on the boss 40 to be brought into contact to the stator 33 of the first motor 2. In addition, a screw hole 40b is formed on the boss 40, and the stator 33 of the first motor 2 is fastened to the casing 30 by screwing a bolt 42 into the screw hole 40b.

The boss 41 as a circular insertion hole is formed by depressing a portion of the outer wall 37 at a level of the rotational axis AL axially outwardly. A radial bearing 43 as a ball bearing is fitted into the boss 41, and the one end 21a of the rotor shaft 21 is rotatably supported by the radial bearing 43.

Thus, the first motor 2 is held in the internal space of the casing 30 surrounded by the motor cover 36. In the casing 30, the stator 33 of the first motor 2 is fixed to the boss 40 by the bolt 42. In the first motor 2, one end 21a of the rotor shaft 21 is supported by the outer wall 37 through the radial bearing 43, and the other end 21b of the rotor shaft 21 is supported by the center support 32 through the radial bearing 47.

The center support 32 is a lid or plate portion corresponding e.g., to the bulkhead 105 of the conventional power transmission unit shown in Fig. 4. In the conventional power transmission unit shown in Fig. 4, the bulkhead 105 is formed integrally with the case 101 in such a manner as to expand inside of the case 101. By contrast, according to the exemplary embodiment of the present invention, the center support 32 is an independent member separated from the casing 30. The center support 32 comprises the flange 44 brought into contact to the contact face 39a of the boss 39 formed on the casing 30, and a boss 45 for supporting the other end 21b of the rotor shaft 21 of the first motor 2 and the other end (i.e., the left end in Fig. 2) of the rotary shaft of the geared transmission 7.

The flange 44 is formed on an outer circumferential portion of the center support 32. A bolt hole 44a is formed on the flange 44 at a portion corresponding to the screw hole 39b formed on the boss 39 of the casing 30, and the center support 32 is fastened to the casing 30 by screwing a bolt 46 into the bolt hole 44a and the screw hole 39b.

The boss 45 as a cylindrical portion protrudes from both sides of the center support 32 in a thickness direction around the rotational axis AL. The other end 21b of the rotor shaft 21 of the first motor 2, and the other end of the rotary shaft of the geared transmission 7 (i.e., the rotary shaft of the sun gear 12 of the power split mechanism 9) are held in an internal hollow space of the boss 45. Specifically, a radial bearing 47 as a ball bearing is fitted into the boss 45 from the casing 30 side, and the other end 21b of the rotor shaft 21 is rotatably supported by the radial bearing 47. In addition, a radial bearing 48 as a ball bearing is fitted onto the boss 45 from the housing 31 side, and the other end 35b of the rotary shaft 35 of the ring gear 13 is supported by the radial bearing 48.

Thus, the center support 23 is attached to the casing 30, and the first motor 2 is held in the chamber created between the casing 30 and the center support 32. Specifically, the flange 44 of the center support 32 is brought into contact to the contact face 39a of the casing 30, and the center support 32 is fastened to the casing 30 by screwing the bolt 46 into the bolt hole 44a and the screw hole 39b. In the chamber created between the casing 30 and the center support 32, the rotor 20 of the first motor 2 is rotatably supported by the casing 30 and the center support 32. Specifically, one end 21a of the rotor shaft 21 is rotatably supported by the casing 30 through the radial bearing 43, and the other end 21b of the rotor shaft 21 is rotatably supported by the center support 32 through the radial bearing 47. Consequently, a motor unit in which the first motor 2 is held in the casing 30 and the opening of the casing 30 is closed by the center support 32 is assembled. The motor unit is joined to the housing 31 holding the geared transmission 7 to form the power transmission unit 4.

Thus, according to the exemplary embodiment of the present invention, the casing 30 formed e.g., by integrating the conventional rear cover 102 and the case 101 shown in Fig. 4 is used in the power transmission unit 4. In the power transmission unit 4, the stator 33 of the first motor 2 is fixed to the casing 30 thus formed. According to the exemplary embodiment of the present invention, therefore, rigidity of the casing 30 is increased compared to that of the conventional rear cover 102 shown in Fig. 4. In addition, since the stator 33 of the first motor 2 as a heavy member is attached to the outer wall 37 of the casing 30, a weight of the outer wall 37 is increased thereby improving a vibration damping characteristic. That is, vibrations and noises generated in the power transmission unit 4 can be absorbed effectively by the casing 30. For this reason, noise emitted from the casing 30 can be reduced effectively.

Moreover, since the vibration damping characteristic of the casing 30 is improved, the conventional thrust bearing 106 for reducing the noise shown in Fig. 4 may be omitted. According to the exemplary embodiment of the present invention, therefore, a size, a weight, and a manufacturing cost of the power transmission unit 4 can be reduced.

Further, in the power transmission unit 4, the center support 32 is attached to the casing 30 in the transaxle case 8. That is, the first motor 2 and the center support 32 may be assembled easily with the casing 30 from the same direction. Furthermore, the motor unit in which the first motor 2 is held in the casing 30 is formed by attaching the center support 32 to the casing 30 in such a manner as to support the rotor shaft 21 by the casing 30 and the center support 32. According to the exemplary embodiment of the present invention, therefore, the power transmission unit 4 may be formed easily by joining the motor unit to the housing 31.

The housing 31 serves as another part of the outer shell of the transaxle case 8. The housing 31 corresponds e.g., to the housing 103 of the conventional power transmission unit shown in Fig. 4. The housing 31 comprises a gear cover 49 and a bulkhead 50.

The gear cover 49 is a cylindrical wall enclosing the chamber for holding the geared transmission 7. In the embodiment shown in Fig. 2, the power split mechanism 9 is held in the chamber formed in the inner circumferential side of the gear cover 49 to serve as the geared transmission 7. One end of the gear cover 49 is opened toward the left side in Fig. 2 in the direction of the rotational axis AL, and the other end of the gear cover 49 is closed by the bulkhead 50 formed integrally with the gear cover 49. In the gear cover 49, the flange 51 is formed to fasten the housing 31 to the casing 30 by the bolt.

Specifically, the flange 51 is formed on an outer circumferential portion of the opening of the gear cover 49, and the contact face 51a is formed on a leading end of the flange 51 to be brought into contact to the contact face 38a of the flange 38 of the casing 30. In addition, the bolt hole 51b is formed on the flange 51 at a portion corresponding to the screw hole 38b formed on the flange 38 of the casing 30. As described, the bolt 52 is screwed into the bolt hole 51b and the screw hole 38b to fasten the housing 31 to the casing 30.

The bulkhead 50 of the housing 31 is a lid or plate portion corresponding e.g., to the side wall 107 of the conventional power transmission unit shown in Fig. 4. As described, the bulkhead 50 is formed integrally with the gear cover 49 in the right side in Fig. 2. In the bulkhead 50, a boss 53 is formed to support one end (i.e., a right end in Fig. 2) of the geared transmission 7. In the embodiment shown in Fig. 2, the input shaft 16 as the rotary shaft of the carrier 14 of the power split mechanism 9 is supported by the boss 53 of the bulkhead 50.

Specifically, the boss 53 as a cylindrical portion protrudes from the bulkhead 50 toward the casing 30 in a thickness direction around the rotational axis AL. A radial bearing as a needle roller bearing is fitted into a hollow space of the boss 53 to rotatably support the input shaft 16 as the rotary shaft of the carrier 14 of the power split mechanism 9. In addition, a radial bearing 55 as a ball bearing is fitted onto the boss 53, and one end 35a of the rotary shaft 35 of the ring gear 13 is supported by the radial bearing 55.

The geared transmission 7 is held in the housing 31. In the embodiment shown in Fig. 2, the power split mechanism 9 is held in the chamber formed between the center support 32 and the housing 31 to serve as the geared transmission 7. Specifically, the input shaft 16 of the power split mechanism 9 is supported rotatably by the bulkhead 50 through the radial bearing 54, and one end 35a of the rotary shaft 35 of the ring gear 13 is supported rotatably by the bulkhead 50 through the radial bearing 55. In order to form the power transmission unit 4, the above-mentioned motor unit holding the first motor 2 that is formed by combining the casing 30 and the center support 32 is joined to the housing 31 thus holding the geared transmission 7. Specifically, the flange 51 of the housing 31 is fixed to the flange 38 of the casing 30 by the bolt 52 to form the transaxle case 8.

Thus, according to the exemplary embodiment of the present invention, the power transmission unit 4 is formed by combining the casing 30 holding the first motor 2 with the housing 31 holding the geared transmission 7. In the power transmission unit 4, therefore, one of joint portions between the members can be reduced compared to the conventional power transmission unit formed of the rear cover 102, the case 101, and the housing 103. That is, in the power transmission unit 4, numbers of the flanges to be joined to the other members, and bolts fixing the flanges contacted to each other can be reduced compared to the conventional power transmission unit. For this reason, number of the parts, material of the parts, and a required man-hour to assemble the power transmission unit 4 can be reduced. In addition, a size, a weight, and a manufacturing cost of the power transmission unit 4 can be reduced.

In the embodiment shown in Fig. 2, a position of the power split mechanism 9 held in the housing 31 in the direction of the rotational axis AL is fixed by thrust bearings 56 and 57. The thrust bearing 56 corresponds e.g., to the thrust bearing 110 interposed between the side wall 107 and the input shaft 108 of the conventional power transmission unit shown in Fig. 4, and in the embodiment shown in Fig. 2, the thrust bearing 56 is interposed between the bulkhead 50 of the housing 31 and the input shaft 16. The thrust bearing 57 corresponds e.g., to the thrust bearing 111 interposed between the rotary shaft 109 and the input shaft 108 of the conventional power transmission unit shown in Fig. 4, and in the embodiment shown in Fig. 2, the thrust bearing 56 is interposed between the carrier 14 of the power split mechanism 9 and the boss 45 of the center support 32. In the conventional power transmission unit shown in Fig. 4, the thrust bearing 106 for reducing noise is arranged in addition to the thrust bearings 110 and 111. On the other hand, in the power transmission unit according to the exemplary embodiment of the present invention, the vibration damping characteristic of the casing 30 is improved. According to the exemplary embodiment of the present invention, therefore, the thrust bearing 106 for reducing noise may be omitted. For this reason, a size, a weight, and a manufacturing cost of the power transmission unit 4 can be reduced.

In order to fasten the transaxle case 8 to the engine 1 by a bolt, a flange 58 is formed on an outer circumferential portion of the bulkhead 50, and a contact face 58a is formed on a leading end of the flange 58 to be brought into contact to a flange formed on at least one of an engine block or crank case (neither of which are shown) of the engine 1. In addition, a bolt hole (not shown) is formed on the flange 58 at a portion corresponding to a screw hole (not shown) formed on the flange of the engine 1. A bolt is screwed into the bolt hole of the housing 31 and the screw hole of the engine 1 to fasten the housing 31 to the engine 1 arranged outside of the transaxle case 8.

Although not especially shown in Fig. 2, in the power transmission unit 4 shown in Fig. 1, the second motor 3 is also held in the casing 30. Specifically, the stator 34 of the second motor 3 is fastened to the casing 30 by a bolt (not shown), and the rotor shaft 28 of the second motor 3 is supported by the outer wall 37 and the bulkhead 50 through radial bearings (not shown). More specifically, one end 28a of the rotor shaft 28 is supported by the outer wall 37 of the casing 30, and the other end 28b of the rotor shaft 28 is supported by bulkhead 50 of the housing 31. Instead, an intermediate portion of the rotor shaft 28 may also be supported by the center support 32.

Thus, in the motor unit, the second motor 3 may also be held in the chamber formed between the casing 30 and the center support 32. According to the exemplary embodiment of the present invention, therefore, the power transmission unit 4 may be assembled easily by attaching the motor unit thus holding both of the first motor 2 and the second motor 3 to the housing 31.

As described, according to the exemplary embodiment of the present invention, the housing 31 of the transaxle case 8 is fixed to the engine 1 arranged outside of the transaxle case 8. For this reason, the power transmission unit 4 according to the exemplary embodiment of the present invention may be applied easily to a hybrid vehicle in which a prime mover includes an engine and at least one motor.

Turning to Fig. 3, there is shown another embodiment of the present invention in which the center support 32 is attached to the housing 31 in the transaxle case 8. In Fig. 3, common reference numerals are allotted to the elements in common with those shown in Fig. 2.

In the embodiment shown in Fig. 3, in addition to the flange 51, a boss 59 is formed in the gear cover 49 to fasten the housing 31 to the center support 32 by a bolt. Specifically, the boss 59 is formed on an opening side of the housing 31 in the direction of the rotational axis AL (i.e., the left side in Fig. 3) in an inner circumferential side of the flange 51. A contact face 59a is formed on a leading end of the boss 59 to be brought into contact to the flange 44 of the center support 32, and a screw hole 59b is formed on the boss 59 at a portion corresponding to the bolt hole 44a formed on the flange 44. A bolt 60 is screwed into the bolt hole 44a of the center support 32 and the screw hole 59b of the housing 31 to fasten the center support 32 to the housing 31.

The geared transmission 7 is held in the housing 31. In the embodiment shown in Fig. 3, the power split mechanism 9 is held in the chamber formed between the center support 32 and the housing 31 to serve as the geared transmission 7. Specifically, the input shaft 16 of the power split mechanism 9 is supported rotatably by the bulkhead 50 through the radial bearing 54, and one end 35a of the rotary shaft 35 of the ring gear 13 is supported rotatably by the bulkhead 50 through the radial bearing 55.

Thus, center support 32 is joined to the housing 31, and the power split mechanism 9 is held in a chamber created between the center support 32 and the housing 31. Specifically, the flange 44 of the center support 32 is brought into contact to the contact face 59a of the housing 31, and the bolt 60 is screwed into the bolt hole 44a of the flange 44 and the screw hole 59b of the boss 59 to fasten the center support 32 to the housing 31. In the chamber created between the center support 32 and the housing 31, the boss 45 of the center support 32 is fitted into the radial bearing 48. Specifically, one end of the input shaft 16 is supported by the bulkhead 50 of the housing 31 through the radial bearing 54, and one end 35a of the rotary shaft 35 of the ring gear 13 is also supported by the bulkhead 50 of the housing 31 through the radial bearing 55. On the other hand, the other end 35b of the rotary shaft 35 of the ring gear 13 is supported by the center support 32 through the radial bearing 48. Consequently, a gear box in which the power split mechanism 9 is held in the housing 31 and the opening of the housing 31 is closed by the center support 32 is assembled. The gear box is joined to the casing 30 holding the first motor 2 by the bolt 52 to form the power transmission unit 4.

Thus, in the power transmission unit 4 according to another embodiment of the present invention shown in Fig. 3, the center support 32 is attached to the housing 31 in the transaxle case 8. According to another embodiment of the present invention, therefore, the geared transmission 7 and the center support 32 may be assembled easily with the housing 31 from the same direction. In addition, the gear box in which the geared transmission 7 is held in the housing 31 is formed by attaching the center support 32 to the housing 31 in such a manner as to support both ends of the rotary shaft of the geared transmission 7. According to another embodiment of the present invention, therefore, the power transmission unit 4 may be formed easily by joining the gear box to the casing 30.

## Claims

1. A power transmission unit (4) that transmits power generated by a prime mover including at least one motor (2), comprising:
a geared transmission (7, 9); and
a transaxle case (8) that holds the motor (2) and the geared transmission (7, 9);
**characterized in that**:
the motor (2) includes a stator (33) and a rotor shaft (21);
the transaxle case (8) includes
a casing (30) that serves as a part of an outer shell of the transaxle case (8),
a housing (31) that is formed separately from the casing (30), and that serves as another part of the outer shell of the transaxle case (8), and
a center support (32) that is formed separately from the casing (30) and the housing (31), and that defines an internal space of the transaxle case (8) to form a chamber of the casing (30) side and a chamber of the housing (31) side;
the casing (30) includes
a motor cover (36) having an opening formed on one of end portions, and
an outer wall (37) that is formed integrally with the other end portion of the motor cover (36) to close the other end portion;
the motor (2) is held within the motor cover (36);
one end (21a) of the rotor shaft (21) is supported by the outer wall (37), and the stator (33) is fixed to the outer wall (37);
the housing (31) includes a gear cover (49) and a bulkhead (50) formed integrally with the gear cover (49) on one end of the gear cover (49);
the geared transmission (7, 9) is held within the gear cover (49);
one end (16, 35a) of a rotary shaft (16, 35) of the geared transmission (7, 9) is supported by the bulkhead (50);
the center support (32) is attached to any one of the casing (30) and the housing (31) in the transaxle case (8) while supporting an other end (21b) of the rotor shaft (21) and an other end (35b) of the rotary shaft (35); and
the casing (30) and the housing (31) are fastened to each other.

2. The power transmission unit (4) as claimed in claim 1, wherein the center support (32) is attached to the casing (30) in the transaxle case (8).

3. The power transmission unit (4) as claimed in claim 1, wherein the center support (32) is attached to the housing (31) in the transaxle case (8).

4. The power transmission unit (4) as claimed in any of claims 1 to 3,
wherein the prime mover includes an engine (1) arranged outside of the transaxle case (8),
the engine (1) is fixed to the housing (31), and
the power transmission unit (4) is applied to a hybrid vehicle (Ve) in which the prime mover includes the motor (2) and the engine (1).

5. The power transmission unit (4) as claimed in claim 4,
wherein the motor includes a first motor (2) and a second motor (3),
the first motor (2) comprises a first stator (33) and a first rotor shaft (21),
the second motor (3) comprises a second stator (34) and a second rotor shaft (28),
the first motor (2) and the second motor (3) are arranged within the motor cover (36),
one end (21a) of the first rotor shaft (21) and one end (28a) of the second rotor shaft (28) are respectively supported by the outer wall (37), and
the first stator (33) and the second stator (34) are fastened respectively to the outer wall (37),
an other end (21b) of the first rotor shaft (21) is supported by the center support (32),
an other end (28b) of the second rotor shaft (28) is supported by the housing (31) or the center support (32), and
the power transmission unit (4) is applied to the hybrid vehicle (Ve) in which the prime mover includes the first motor (2), the second motor (3), and the engine (1).
